# FASCICULE DE BREVET EUROPEEN

(11) **EP 4 373 687 B1**
(45) Date de publication et mention de la délivrance du brevet: **25.03.2026**
(21) Numéro de dépôt: 22730583.6
(22) Date de dépôt: 18.05.2022
(51) Int. Cl.: B60K 5/12, B60K 1/00, B60K 5/00

(54) **SUPPORT DE GROUPE MOTOPROPULSEUR À ZONE DE DÉFORMATION PROGRAMMÉE**
ANTRIEBSSTRANGUNTERSTÜTZUNG MIT PROGRAMMIERTER VERFORMUNGSZONE
POWERTRAIN SUPPORT WITH PROGRAMMED DEFORMATION ZONE

(30) Priorité: 23.07.2021 FR 2107977
(43) Date de publication de la demande: 29.05.2024
(73) Titulaire: Stellantis Auto SAS, 78300 Poissy (FR)
(72) Inventeur: BOISGARD, Vincent, 37540 ST CYR SUR LOIRE (FR); PERU, Marc, 92290 CHATENAY MALABRY (FR); PICQUET, Christophe, 78000 VERSAILLES (FR); MARCILLE, Sylvain, 91070 BONDOUFLE (FR); ZEITOUNI, Richard, 78390 BOIS D ARCY (FR)
(74) Mandataire: PSIP
(86) Numéro de dépôt international: PCT/FR2022/050942
(87) Numéro de publication internationale: WO 2023/002094

(56) Documents cités:
- EP-A1- 2 189 317
- CN-A- 103 348 161
- DE-A1- 102006 002 750

## Description

La présente invention porte sur un support de groupe motopropulseur à zone de déformation programmée. L'invention trouve une application particulièrement avantageuse, mais non exclusive, avec les groupes motopropulseurs de type électrique formés par un moteur électrique associé à un réducteur de vitesse. L'invention peut également être mise en œuvre avec un groupe motopropulseur de type thermique formé par un moteur thermique, un embrayage, et une boîte de vitesses.

Les véhicules automobiles subissent des essais de chocs dans des conditions particulières qui représentent différents types d'accidents pouvant se produire, pour notamment chercher à protéger les passagers des blessures et améliorer la sécurité.

Ces essais comprennent en particulier des chocs sur la partie avant du véhicule, représentant des accidents fréquents. On prévoit dans ces cas une déformation particulière des brancards avant dans des zones précises de déformation contrôlée. Ces déformations absorbent de l'énergie mécanique et permettent un guidage des éléments principaux, le groupe motopropulseur notamment, pour éviter des intrusions dans l'habitacle qui pourraient blesser les occupants.

Dans le cas où les supports du groupe motopropulseur fixés sur un brancard ne sont pas prévus pour se rompre, ils peuvent alors rigidifier de manière trop importante ce brancard qui ne peut pas se déformer librement.

En outre, l'état de la technique est connu du document EP2189317A1.

L'invention vise à remédier efficacement à cet inconvénient en proposant un ensemble pour véhicule automobile comprenant:
- au moins un brancard ayant une direction d'extension longitudinale, et
- au moins un support de groupe motopropulseur fixé sur ledit brancard, ledit support de groupe motopropulseur comportant:
- une cage de circonférence fermée délimitant un espace intérieur creux,
- une cale réalisée dans un matériau souple disposée au moins en partie à l'intérieur de l'espace intérieur creux de la cage, et
- au moins deux interfaces de fixation sur le brancard ménagées dans la cage.

Conformément à l'invention, une portion de la cage s'étendant longitudinalement suivant la direction d'extension longitudinale du brancard comporte une zone de déformation programmée ayant une résistance mécanique réduite, la portion de la cage comportant la zone de déformation programmée est disposée entre les deux interfaces de fixation sur le brancard.

L'invention permet ainsi au support de groupe motopropulseur de se déformer au niveau de la zone de déformation programmée lors d'un choc frontal du véhicule de façon à suivre une déformation du brancard. Le support selon l'invention peut se monter facilement à la place des supports suivant l'art antérieur ne comportant pas de point de rupture programmé, sans modifier la caisse du véhicule ni le groupe motopropulseur. Cela permet de réduire les coûts d'étude et de fabrication. En outre, le support selon l'invention présente un encombrement similaire et un coût qui n'est pas majoré par rapport à un autre support élastique du même type réalisé suivant l'art antérieur.

Selon une réalisation de l'invention, la zone de déformation programmée comporte au moins une creusure réalisée dans un bord de la portion de la cage.

Selon une réalisation de l'invention, la zone de déformation programmée comporte au moins une plaque en forme d'arche.

Selon une réalisation de l'invention, la zone de déformation programmée comporte une couche de deux plaques en forme d'arche.

Selon une réalisation de l'invention, chaque interface de fixation est constituée par une oreille en saillie munie d'un trou de passage d'un élément de fixation.

Selon une réalisation de l'invention, chaque interface de fixation est fixée sur une patte de fixation correspondante liée mécaniquement à une face interne du brancard.

Selon une réalisation de l'invention, une patte de fixation comporte une paroi s'étendant contre la face interne du brancard et une paroi horizontale s'étendant perpendiculairement à la face interne du brancard.

Selon une réalisation de l'invention, la cage est réalisée dans un matériau métallique, notamment dans un matériau en aluminium ou en acier.

L'invention a également pour objet un véhicule automobile comportant un ensemble tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une vue de dessus de la partie structurelle avant d'un véhicule automobile comportant un brancard intégrant un support de groupe motopropulseur selon la présente invention;
[Fig. 2] La figure 2 est une vue en perspective d'un brancard de véhicule automobile comportant un support de groupe motopropulseur selon l'invention fixé sur une face interne dudit brancard;
[Fig. 3] La figure 3 est une vue en perspective d'une cage d'un support de groupe motopropulseur selon la présente invention;
[Fig. 4] La figure 4 est une vue de dessus d'un support de groupe motopropulseur selon la présente invention;
[Fig. 5] La figure 5 est une vue en perspective d'une première variante de réalisation d'un support de groupe motopropulseur selon la présente invention;
[Fig. 6] La figure 6 est une vue en perspective d'une deuxième variante de réalisation d'un support de groupe motopropulseur selon la présente invention;
[Fig. 7] La figure 7 est une vue de dessus illustrant une déformation de brancards avant et d'un support de groupe motopropulseur selon l'invention lors d'un choc frontal subi par le véhicule automobile;
[Fig. 8] La figure 8 est une vue de dessus illustrant une déformation d'un support de groupe motopropulseur selon l'invention suite à un choc frontal subi par un véhicule automobile.

Les éléments identiques, similaires, ou analogues conservent la même référence d'une figure à l'autre.

Par ailleurs, les termes relatifs à des indications spatiales du type "horizontal" ou "vertical" sont entendus par référence à l'orientation d'un véhicule en position d'utilisation disposé sur un plan horizontal.

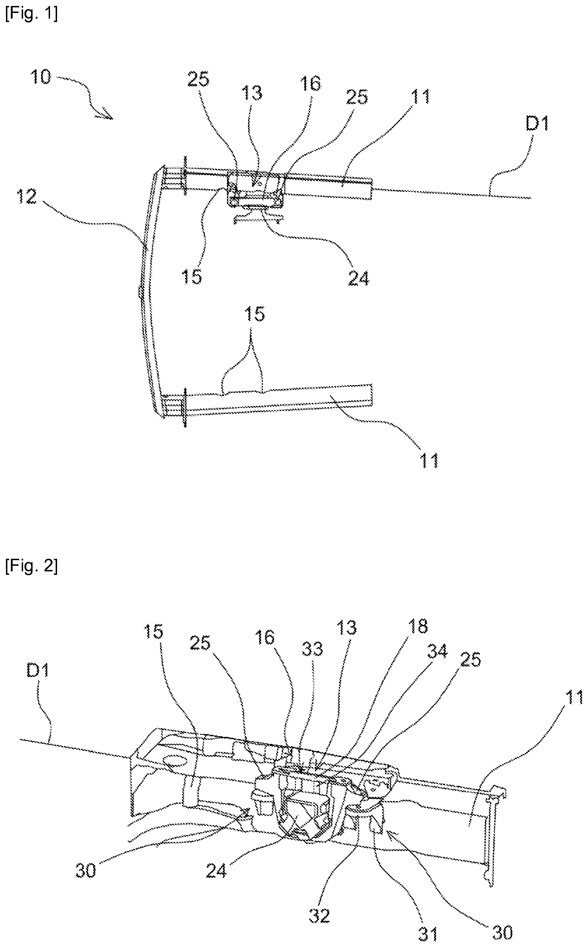

La figure 1 montre la partie avant structurelle 10 d'un véhicule automobile comportant deux brancards 11 destinés à être disposés de part et d'autre d'un groupe motopropulseur (non représenté). Les brancards 11 relient la caisse à la face avant 12 du véhicule. Un brancard 11 présente une direction d'extension longitudinale D1.

Le groupe motopropulseur est destiné à être fixé sur un brancard 11 par l'intermédiaire d'un support 13 décrit plus en détails ci-après. Le groupe motopropulseur pourra être un groupe motopropulseur de type électrique formé notamment par un moteur électrique associé à un réducteur de vitesse ou un groupe motopropulseur de type thermique formé notamment par un moteur thermique, un embrayage, et une boîte de vitesses.

Un brancard 11 présente avantageusement au moins une creusure 15 ménagée dans un bord afin de favoriser sa déformation longitudinale en cas de choc frontal.

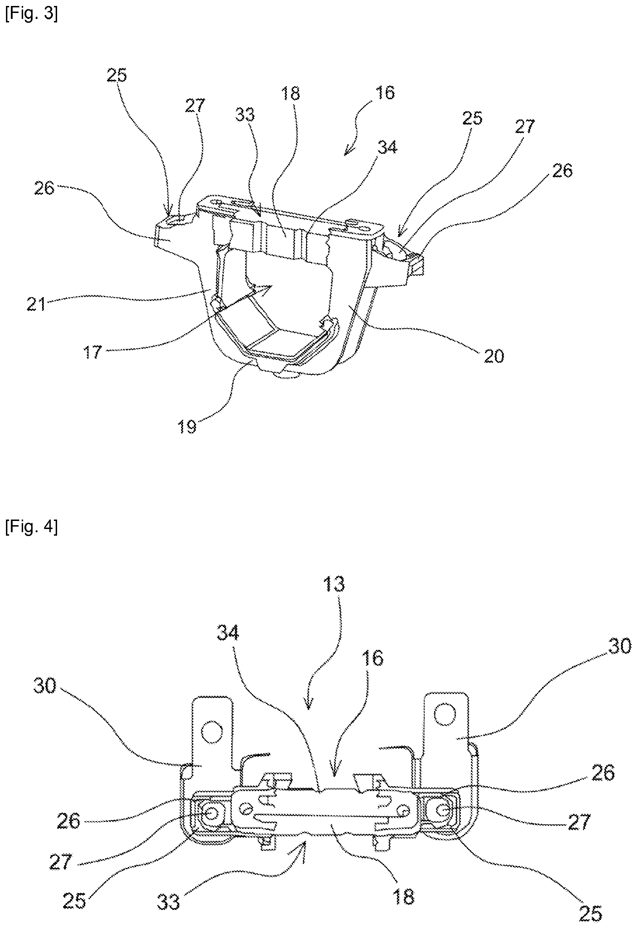

Comme on peut le voir sur les figures 1 et 2, un support 13 de groupe motopropulseur est fixé sur un brancard 11. Le support 13 comporte une cage 16 de circonférence fermée délimitant un espace intérieur creux 17. Plus précisément, comme on peut le voir sur la figure 3, la cage 16 présente une portion supérieure 18, une portion inférieure 19, et deux portions latérales 20, 21 assurant une liaison entre la portion supérieure 18 et la portion inférieure 19. Les faces internes de ces portions de la cage 16 délimitent l'espace intérieur creux 17. Les portions supérieure 18 et inférieure 19 de la cage 16 s'étendent longitudinalement suivant la direction d'extension longitudinale D1 du brancard 11. La cage 16 pourra présenter une forme globalement trapézoïdale. La cage 16 est réalisée de préférence dans un matériau métallique, notamment dans un matériau en aluminium ou en acier.

Une cale 24 réalisée dans un matériau souple est disposée au moins en partie à l'intérieur de l'espace intérieur creux 17 de la cage 16, tel que cela est montré sur la figure 2. La cale 24 comporte une interface de fixation avec un organe du groupe motopropulseur, tel que la boîte de vitesse ou le moteur thermique dans le cas d'un groupe motopropulseur thermique ou le réducteur de vitesse ou la machine électrique tournante dans le cas d'un groupe motopropulseur électrique.

La cale 24 forme un amortisseur de vibration de façon à isoler le groupe motopropulseur par rapport à la caisse du véhicule. La cale 24 est de préférence réalisée dans un matériau élastomère. En variante, la cale 24 pourra être réalisée en caoutchouc ou tout autre matériau souple adapté à l'application.

La cage 16 comporte également deux interfaces de fixation 25 sur le brancard 11. Les interfaces de fixation 25 sont constituées chacune par une oreille 26 en saillie munie d'un trou 27 de passage d'un élément de fixation. L'élément de fixation pourra être constitué par une vis, un rivet, un goujon ou tout autre élément de fixation adapté à l'application.

Comme on peut le voir sur la figure 4, en vue de dessus, les oreilles de fixation 26 s'étendent dans le prolongement de la portion supérieure 18 de la cage 16. La portion supérieure 18 est disposée entre les deux interfaces de fixation 25.

Une interface de fixation 25 est fixée à l'aide d'un élément de fixation sur une patte de fixation 30 correspondante liée mécaniquement à une face interne du brancard 11, tel que cela est montré sur la figure 2. La face interne du brancard 11 est tournée vers l'autre brancard 11. En l'occurrence, une patte de fixation 30 présente une forme en L avec une paroi 31 s'étendant contre la face interne du brancard 11 et une paroi horizontale 32 s'étendant perpendiculairement à la face interne du brancard 11. L'interface de fixation 25 est fixée sur la face horizontale 32. Une patte de fixation 30 pourra être soudée sur la face interne du brancard 11. En variante, une patte de fixation 30 pourra être fixée sur la face interne du brancard 11 par vissage, rivetage ou tout autre technique de fixation adaptée à l'application.

La portion supérieure 18 de la cage 16 comporte une zone de déformation programmée 33 ayant une résistance mécanique réduite par rapport au reste de la cage 16.

Dans le mode de réalisation de la figure 2, la zone de déformation programmée 33 comporte au moins une creusure 34 réalisée dans un bord de la portion supérieure 18 de la cage 16. En l'occurrence, la zone de déformation programmée 33 comporte deux creusures 34 réalisées dans chaque bord de la portion supérieure 18. Les creusures 34 permettent de réduire l'épaisseur de la portion supérieure 18 pour créer localement une faiblesse mécanique dans la cage 16. Ce mode de réalisation est particulièrement bien adapté à une cage 16 réalisée en aluminium.

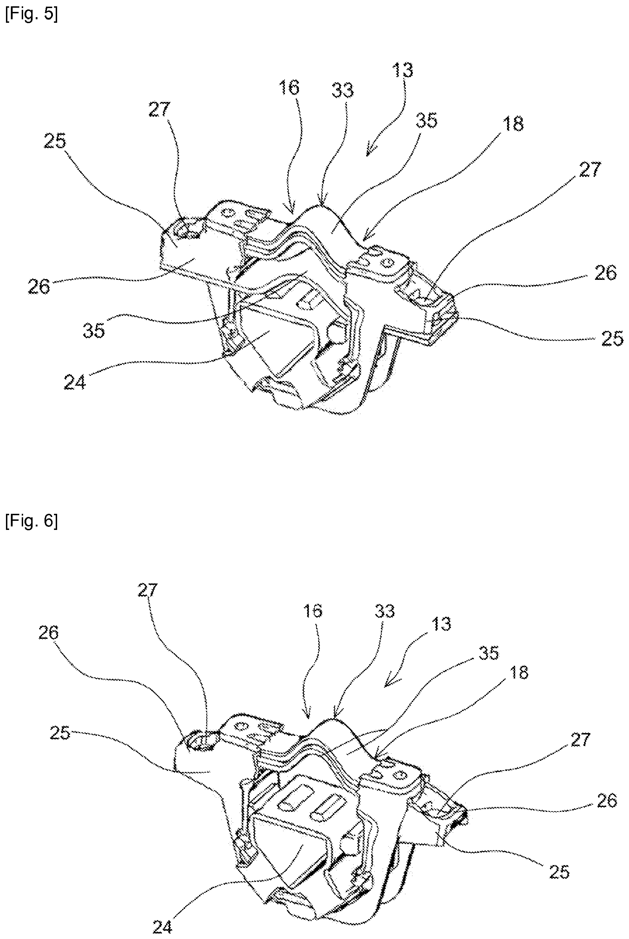

Dans le mode de réalisation de la figure 5, la zone de déformation programmée 33 comporte au moins une plaque 35 en forme d'arche. La forme d'arche correspond à un pli en forme en V à pointe arrondie de la plaque 35 formant au moins une partie de la portion supérieure 18 de la cage 16. En l'occurrence, on prévoit une couche de deux plaques 35 ainsi qu'une plaque 35 additionnelle disposées l'une au-dessus de l'autre. Ce mode de réalisation est particulièrement bien adapté à une cage 16 réalisée en acier.

Dans le mode de réalisation de la figure 6, la zone de déformation programmée 33 comporte une seule couche de deux plaques 35 en forme d'arche. Ce mode de réalisation est particulièrement bien adapté à une cage 16 réalisée en acier pour laquelle on souhaite une résistance mécanique moindre que pour la réalisation précédente.

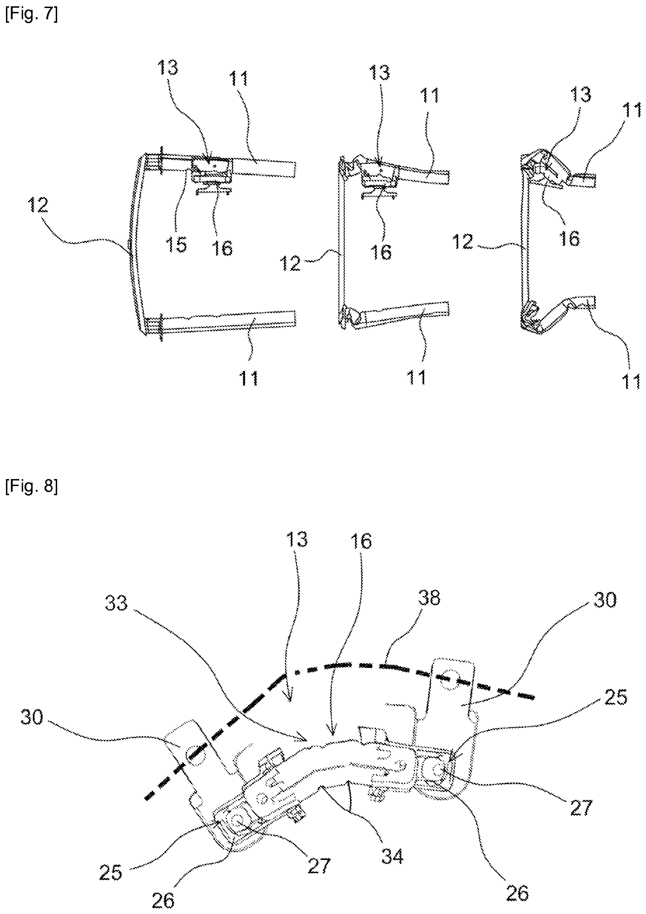

Comme cela est illustré par la figure 7, lors d'un choc frontal, le support 13 peut se déformer suivant sa zone de déformation programmée 33 de sorte que la compressibilité du brancard 11 demeure satisfaisante. En effet, grâce à l'intégration d'un support 13 selon l'invention, la perte de compressibilité est limitée à 15% au lieu de 40% avec un support selon l'état de la technique dépourvu de zone de déformation programmée 33.

La figure 8 met en évidence que la cage 16 du support 13 peut se comprimer et se plier au niveau des creusures 34 de façon à accompagner la déformation du brancard 11 dont la courbure de déformation 38 est représentée en traits discontinus.

En variante, la zone de déformation programmée 33 est ménagée dans la portion inférieure 19 de la cage 16 ou bien dans la portion supérieure 18 et dans la portion inférieure 19 de la cage 16.

## Revendications

1. Ensemble pour véhicule automobile comprenant:
- au moins un brancard (11) ayant une direction d'extension longitudinale (D1), et
- au moins un support (13) de groupe motopropulseur fixé sur ledit brancard (11), ledit support (13) de groupe motopropulseur comportant:
- une cage (16) de circonférence fermée délimitant un espace intérieur creux (17),
- une cale (24) réalisée dans un matériau souple disposée au moins en partie à l'intérieur de l'espace intérieur creux (17) de la cage (16), et
- au moins deux interfaces de fixation (25) sur le brancard (11) ménagées dans la cage (16),
**caractérisé en ce qu'**une portion (19) de la cage (16) s'étendant longitudinalement suivant la direction d'extension longitudinale (D1) du brancard (11) comporte une zone de déformation programmée (33) ayant une résistance mécanique réduite, ladite portion (19) de la cage (16) comportant la zone de déformation programmée (33) étant disposée entre les deux interfaces de fixation (25) sur le brancard (11).

2. Ensemble selon la revendication 1, **caractérisé en ce que** la zone de déformation programmée (33) comporte au moins une creusure (34) réalisée dans un bord de la portion de la cage (16).

3. Ensemble selon la revendication 1, **caractérisé en ce que** la zone de déformation programmée (33) comporte au moins une plaque (35) en forme d'arche.

4. Ensemble selon la revendication 3, **caractérisé en ce que** la zone de déformation programmée (33) comporte une couche de deux plaques (35) en forme d'arche.

5. Ensemble selon l'une quelconque des revendications 1 à 4, **caractérisé en ce que** chaque interface de fixation (25) est constituée par une oreille en saillie (26) munie d'un trou (27) de passage d'un élément de fixation.

6. Ensemble selon l'une quelconque des revendications 1 à 5, **caractérisé en ce que** chaque interface de fixation (25) est fixée sur une patte de fixation (30) correspondante liée mécaniquement à une face interne du brancard (11).

7. Ensemble selon la revendication 6, **caractérisé en ce qu'**une patte de fixation (30) comporte une paroi (31) s'étendant contre la face interne du brancard (11) et une paroi horizontale (32) s'étendant perpendiculairement à la face interne du brancard (11).

8. Ensemble selon l'une quelconque des revendications 1 à 7, **caractérisé en ce que** la cage (16) est réalisée dans un matériau métallique, notamment dans un matériau en aluminium ou en acier.

9. Véhicule automobile comportant un ensemble tel que défini selon l'une quelconque des revendications précédentes.

## Patentansprüche

1. Baugruppe für ein Kraftfahrzeug, umfassend:
- mindestens einen Längsträger (11) mit einer longitudinalen Erstreckungsrichtung (D1), und
- mindestens einen Antriebsstrangträger (13), der an dem Längsträger (11) befestigt ist, wobei der Antriebsstrangträger (13) umfasst:
• einen Käfig (16) mit geschlossener Umfangsform, der einen hohlen Innenraum (17) begrenzt,
• ein Dämpfungselement (24) aus einem elastischen Material, das zumindest teilweise innerhalb des hohlen Innenraums (17) des Käfigs (16) angeordnet ist, und
• mindestens zwei Befestigungsschnittstellen (25) am Längsträger (11), die im Käfig (16) ausgebildet sind,
**dadurch gekennzeichnet, dass** ein Abschnitt (19) des Käfigs (16), der sich longitudinal entlang der longitudinalen Erstreckungsrichtung (D1) des Längsträgers (11) erstreckt, eine programmierte Verformungszone (33) mit verringerter mechanischer Festigkeit aufweist, wobei der Abschnitt (19) des Käfigs (16), der die programmierte Verformungszone (33) umfasst, zwischen den beiden Befestigungsschnittstellen (25) am Längsträger (11) angeordnet ist.

2. Baugruppe nach Anspruch 1, **dadurch gekennzeichnet, dass** die programmierte Verformungszone (33) mindestens eine Ausnehmung (34) aufweist, die in einem Rand des Abschnitts des Käfigs (16) ausgebildet ist.

3. Baugruppe nach Anspruch 1, **dadurch gekennzeichnet, dass** die programmierte Verformungszone (33) mindestens eine bogenförmige Platte (35) umfasst.

4. Baugruppe nach Anspruch 3, **dadurch gekennzeichnet, dass** die programmierte Verformungszone (33) eine Schicht aus zwei bogenförmigen Platten (35) umfasst.

5. Baugruppe nach einem der Ansprüche 1 bis 4, **dadurch gekennzeichnet, dass** jede Befestigungsschnittstelle (25) durch eine vorspringende Lasche (26) mit einer Durchgangsbohrung (27) für ein Befestigungselement gebildet ist.

6. Baugruppe nach einem der Ansprüche 1 bis 5, **dadurch gekennzeichnet, dass** jede Befestigungsschnittstelle (25) an einer entsprechenden Befestigungslasche (30) befestigt ist, die mechanisch mit einer inneren Fläche des Längsträgers (11) verbunden ist.

7. Baugruppe nach Anspruch 6, **dadurch gekennzeichnet, dass** eine Befestigungslasche (30) eine Wand (31) aufweist, die sich entlang der inneren Fläche des Längsträgers (11) erstreckt, sowie eine horizontale Wand (32), die sich senkrecht zur inneren Fläche des Längsträgers (11) erstreckt.

8. Baugruppe nach einem der Ansprüche 1 bis 7, **dadurch gekennzeichnet, dass** der Käfig (16) aus einem metallischen Material, insbesondere aus Aluminium oder Stahl, hergestellt ist.

9. Kraftfahrzeug, umfassend eine Baugruppe nach einem der vorhergehenden Ansprüche.

## Claims

1. An assembly for a motor vehicle comprising:
- at least one side member (11) having a longitudinal extension direction (D1), and
- at least one powertrain support (13) fixed to said side member (11), said powertrain support (13) comprising:
• a cage (16) having a closed circumference defining a hollow internal space (17),
• a spacer (24) made of a flexible material, arranged at least partly inside the hollow internal space (17) of the cage (16), and
• at least two fastening interfaces (25) on the side member (11), formed in the cage (16),
**characterized in that** a portion (19) of the cage (16) extending longitudinally along the longitudinal extension direction (D1) of the side member (11) comprises a programmed deformation zone (33) having reduced mechanical strength, said portion (19) of the cage (16) comprising the programmed deformation zone (33) being arranged between the two fastening interfaces (25) on the side member (11).

2. The assembly according to claim 1, **characterized in that** the programmed deformation zone (33) comprises at least one recess (34) formed in an edge of the portion of the cage (16).

3. The assembly according to claim 1, **characterized in that** the programmed deformation zone (33) comprises at least one arch-shaped plate (35).

4. The assembly according to claim 3, **characterized in that** the programmed deformation zone (33) comprises a layer of two arch-shaped plates (35).

5. The assembly according to any one of claims 1 to 4, **characterized in that** each fastening interface (25) is formed by a protruding lug (26) provided with a hole (27) for the passage of a fastening element.

6. The assembly according to any one of claims 1 to 5, **characterized in that** each fastening interface (25) is fixed to a corresponding fastening tab (30) mechanically connected to an inner face of the side member (11).

7. The assembly according to claim 6, **characterized in that** a fastening tab (30) comprises a wall (31) extending against the inner face of the side member (11) and a horizontal wall (32) extending perpendicularly to the inner face of the side member (11).

8. The assembly according to any one of claims 1 to 7, **characterized in that** the cage (16) is made of a metallic material, in particular of aluminum or steel.

9. motor vehicle comprising an assembly as defined in any one of the preceding claims.
